# EUROPEAN PATENT SPECIFICATION

(11) **EP 1 480 738 B1**
(45) Date of publication and mention of the grant of the patent: **15.06.2005**
(21) Application number: 03708728.5
(22) Date of filing: 25.02.2003
(51) Int. Cl.: B01J 19/00

(54) **APPARATUS FOR TREATMENT OF LIGHT-SENSITIVE BIOPOLYMERS**
VORRICHTUNG ZUR BEHANDLUNG VON LICHTEMPFINDLICHEN BIOPOLYMEREN
APPAREIL PERMETTANT DE TRAITER DES BIOPOLYMERES PHOTOSENSIBLES

(30) Priority: 26.02.2002 NL 1020066
(43) Date of publication of application: 01.12.2004
(73) Proprietor: Flexgen Technologies B.V., 2333 CP Leiden (NL)
(72) Inventor: HEEMSKERK, Cornelis, Jacobus, Maria, NL-2172 HZ Sassenheim (NL); DEN DUNNEN, Johannes, Theodorus, NL-3069 LA Rotterdam (NL); VAN BOOM, Jacobus, Hubertus, NL-2343 CR Oegstgeest (NL)
(74) Representative: Van Breda, Jacobus
(86) International application number: PCT/NL2003/000144
(87) International publication number: WO 2003/072240

(56) References cited:
- DE-A- 10 027 119
- PATENT ABSTRACTS OF JAPAN vol. 013, no. 438 (P-939), 3 October 1989 (1989-10-03) -& JP 01 167649 A (HITACHI SOFTWARE ENG CO LTD), 3 July 1989 (1989-07-03) -& JP 01 167649 A (HITACHI SOFTWARE ENG. K.K.) 3 July 1989 (1989-07-03)
- ANONYMOUS: "DIGITAL OPTICAL CHEMISTRY" ANONYMOUS, 14 June 1999 (1999-06-14), XP002126303

## Description

The invention relates to an apparatus for treating light-sensitive biopolymers, comprising at least a light source, a process chamber suitable for receiving a substrate on which the biopolymers are placed for treatment with light from the light source, and an allocation member for directing the light from the light source to the selected sites on the substrate.

Such an apparatus is known from the article "Maskless fabrication of light-directed oligonucleotide microarrays using a digital micromirror array" by the authors Singh-Gason S. et al, published in 1999 in Nature Biotechnology vol. 17, pp 947-978.

In the known apparatus an ultraviolet light source is followed by a filter and subsequently a reflection mask in the form of a digital micromirror array. Via this reflection mask the ultraviolet light is directed via a special projection screen onto the substrate in the process chamber for the formation of a DNA test array. The process chamber is connected with a so-called oligosynthesiser which serves for conducting the respective liquids necessary for the formation of the DNA test array to the process chamber or away from the process chamber.

Due to the light from the ultraviolet light source being projected selectively onto specific sites on the substrate, a local activation takes place of the respective photolabile group supplied with said liquids. In this manner a desired DNA nucleotide can be formed successively on any selected site on the substrate.

With such an apparatus it is possible to fabricate DNA test arrays of at least 40,000 nucleotide positions, which means that the formation of such an array is a time-consuming process which moreover has to meet a high standard of accuracy in order to avoid incorrect nucleotide formation in positions adjacent to the illuminated sites. Consequently, high standards have to be met, for example, with respect to the accuracy and speed with which the allocation member can direct the light from the ultraviolet light source.

It is the object of the invention to meet these and other requirements that in practise have to be fulfilled by an apparatus of the kind mentioned in the preamble, and to provide such an apparatus that can be manufactured at relatively low cost and can, in addition, be easily transported.

A further object of the invention is to provide such an apparatus that can be used not only for the formation of a DNA test array but also for generally treating light-sensitive biopolymers.

Such biopolymers also include for example RNA and aminoacids (peptides, proteins), that may or may not be modified, thus pure DNA, RNA and protein building blocks (nucleotides, aminoacids), as well as those with particular modifications (fluorochromes, sugargroup-glycoproteins, phosphate, methyl), and also those of which the building blocks themselves are already modified (DNA, LNA, synthetic aminoacids). The person skilled in the art will find no difficulty in further supplementing this list.

The objectives of the invention can be achieved with an apparatus that complies with one or several of the claims appended to the specification.

In a first aspect, the apparatus is characterised in that the allocation member comprises at least one motor-driven mirror, the mirror is mounted on a rotatable spool arranged between poles of a device generating a magnetic field, and that the allocation member has an adjustable source of electricity connected with the spool for controlling the orientation of the mirror. This has been shown to provide a fast and accurately working allocation member of relatively little complexity, that in addition can be realised at low costs, and that can be widely used in the above mentioned field. For example, the apparatus according to the invention makes it possible to simply carry out a flow synthesis in a number of consecutive synthesis steps, with the area to be illuminated being moved on slightly for each subsequent synthesis step. In this way a wide variety of built up molecules can be realised, which may vary especially in length.

It is remarked that the substrate may be immobilised or attached to a solid support in the form of, among other things but not exclusively, a smooth surface such as a microscope slide, a porous matrix, smooth or porous spheres, or gel coating.

The apparatus according to the invention may be suitably realised by using a so-called galvanomirror for the allocation member.

For an economical energy consumption the mirror is preferably dielectrically coated to realise a reflection coefficient of at least .99 in the relevant wave range of the light to be reflected.

It is further preferred for the motor of the mirror to be temperature-stabilised. This measure guarantees a high reproducibility of the adjustment behaviour of the allocation member.

In a further aspect of the invention, the apparatus is characterised in that a focusing lens, preferably an F-theta-lens is placed in the optical path between the mirror and the substrate. This further increases the precision of positioning the light beam on the substrate. As this substrate is generally flat, a correction is necessary for the light reflected by the mirror, whose focusing point will only lie on the mirror axis in the plane of the substrate. A suitable F-theta-lens useful for this purpose is such a lens from Sill Optics in Germany type number S4 LFT 3100.

As a rule it is also necessary to use a beam expander. This is known to the person skilled in the art and is used to produce a light spot of the correct dimensions with the aid of the focussing lens.

In one suitable embodiment of the apparatus, the light source is embodied as ultraviolet light source. Good results can be attained if the ultraviolet light source operates in the 390 nm range, preferably at approximately 350 nm. This is realised preferably by using a frequency-trebled Nd:YAG laser. Such a diode laser provides a low cost, low energy-consuming light source meeting the requirements that an apparatus for the treatment of light-sensitive biopolymers has to comply with.

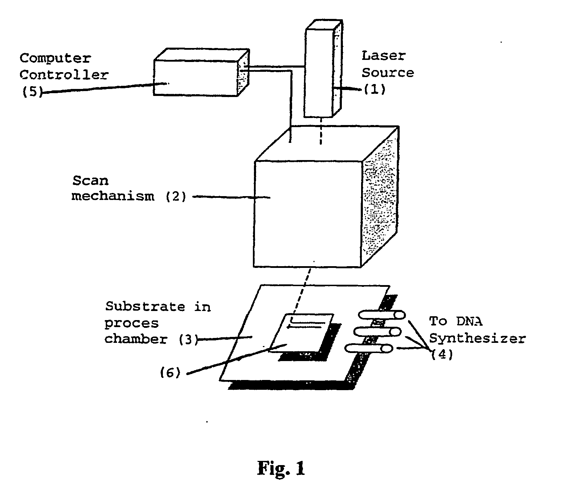

The invention will now be further elucidated with reference to a non-limiting exemplary embodiment and with reference to the drawing which in a single figure schematically shows an apparatus for the preparation of a DNA test array according to the invention.

As already explained above, the invention is not limited to this application of the apparatus, rather, the apparatus can be used for treating light-sensitive biopolymers in general. In order to keep the explanation of the claims more accessible, the example relates to the preparation of a DNA test array only.

The figure shows an apparatus for preparing a DNA test array, comprising an ultraviolet light source 1, and further a process chamber 3 suitable to receive a substrate 6 on which the DNA test array is formed. This substrate may be, for example, glass or polypropylene or another suitable material.

For the preparation of the DNA test array there is further provided an allocation member 2, giving direction to the light from the ultraviolet light source 1 for illuminating selected sites on the substrate 6 in the process chamber 3. Further provided are conduits 4 for supply and discharge of liquids required at the sites to be illuminated on the substrate 6, in order to there realise the desired nucleotide formation.

According to the invention, the allocation member 2 is embodied as a motor-driven mirror or mirrors, each of which is mounted on rotatable spools disposed in a magnetic field, for example, by arranging the spools between the poles of a permanent magnet. The figure further shows a computer-controlled regulator 5, which serves for adjusting the current to be conducted through the spool or spools, so that the mirror placed thereon assumes the desired position corresponding with the site to be illuminated on the substrate 6. One thing and another is indicated very schematically in the figure, but is completely clear to the person skilled in the art so that further explanation is not required.

It is advantageous to use for the said allocation member 2 a so-called galvanomirror. Such a galvanomirror has been known for many years, is extremely accurate, and is available at relatively low cost.

It is further advantageous and generally also desirable for the motor of the mirror to be temperature-stabilised, for example at approximately 50 °C, in order to achieve a high degree of reproducibility of the adjustment behaviour of the mirror.

The allocation member 2 preferably comprises a focusing lens, and more preferably a so-called F-theta-lens placed in the optical path between the mirror and the substrate 6. The manner in which this is executed is completely known to the person skilled in the art so that no further explanation is required.

For the ultraviolet light source it is desirable to use a source that operates in the 340-390 nm range, preferably at approximately 350 nm.

The inventor especially proposes to use a Nd:YAG laser with a trebled frequency. Such a diode laser serves the purpose and is available at low cost.

Finally, it is again emphasised that the protective scope merited by the claims is not limited to the above example; this example merely serves to eliminate any possible ambiguities in these claims without limiting them in any way. To a person skilled in the art it is obvious that the apparatus placed under protection can be used in many applications, and that any such application is covered by the appended claims.

## Claims

1. An apparatus for treating light-sensitive biopolymers, comprising at least a light source, a process chamber suitable for receiving a substrate on which the biopolymers are placed for treatment with light from the light source, and an allocation member for directing the light from the light source to selected sites on the substrate, **characterised in that** the allocation member comprises at least one motor-driven mirror, the mirror is mounted on a rotatable spool arranged between poles of a device generating a magnetic field, and that the allocation member has an adjustable source of electricity connected with the spool for controlling the orientation of the mirror.

2. An apparatus according to claim 1, **characterised in that** the orientation of the mirror is adjustable to a predetermined position corresponding with the selected illumination site on the substrate.

3. An apparatus according to claim 1 or 2, **characterised in that** the allocation member is a galvanomirror.

4. An apparatus according to one of the claims 1-3, **characterised in that** the motor of the mirror is temperature-stabilised.

5. An apparatus according to one of the claims 1-4, **characterised in that** a focusing lens, preferably an F-theta-lens is placed in the optical path between the mirror and the substrate.

6. An apparatus according to one of the claims 1-5, **characterised in that** the light source is an ultraviolet light source.

7. An apparatus according to claim 6, **characterised in that** the ultraviolet light source operates in the 340-390 nm range, preferably at approximately 350 nm.

8. An apparatus according to claim 7, **characterised in that** the ultraviolet light source is a frequency-trebled Nd:YAG laser.

9. Method for treating light-sensitive biopolymers, using at least a light source, a process chamber suitable for receiving a substrate on which the biopolymers are placed for treatment with light from the light source, and an allocation member for directing the light from the light source to selected sites on the substrate, **characterized in that** for the allocation member use is made of at least one motor-driven mirror which is mounted on a rotatable spool arranged between poles of a device generating a magnetic field, wherein the orientation of the mirror is controlled by connecting an adjustable source of electricity to the spool.

10. A method according to claim 9, **characterized in that** the orientation of the mirror is adjusted to a predetermined position corresponding with a selected illumination site on the substrate.

11. Method according to claim 9 or 10, **characterized in that** in use the temperature of the motor of the mirror is stabilised.

## Patentansprüche

1. Vorrichtung zur Behandlung von lichtempfindlichen Biopolymeren, mit wenigstens einer Lichtquelle (1), einer Prozesskammer (3), welche zur Aufnahme eines Substrates (6) geeignet ist, auf welchem sich die Biopolymere zu ihrer Behandlung mit Licht von der Lichtquelle (1) befinden, und mit einer Verteilereinheit (2), um das Licht der Lichtquelle (1) zu ausgewählten Bereichen auf dem Substrat (6) zu lenken, **dadurch gekennzeichnet, dass** die Verteilereinheit (2) wenigstens einen motorgetriebenen Spiegel aufweist, welcher auf einer drehbaren Spule befestigt ist, die sich ihrerseits zwischen Polen eines ein Magnetfeld erzeugenden Gerätes befindet, und dass die Verteilereinheit (2) eine einstellbare elektrische Energiequelle (5) aufweist, die mit der Spule zur Steuerung der Orientierung des Spiegels verbunden ist.

2. Vorrichtung nach Anspruch 1, **dadurch gekennzeichnet, dass** sich die Orientierung des Spiegels in einer vorgegebenen Position einstellen lässt, welche zum ausgewählten bestrahlten Bereich auf dem Substrat (6) korrespondiert.

3. Vorrichtung nach Anspruch 1 oder 2, **dadurch gekennzeichnet, dass** die Verteilereinheit (2) ein Galvanospiegel ist.

4. Vorrichtung nach einem der Ansprüche 1 bis 3, **dadurch gekennzeichnet, dass** der Motor des Spiegels temperaturstabilisiert wird.

5. Vorrichtung nach einem der Ansprüche 1 bis 4, **dadurch gekennzeichnet, dass** eine Fokussierlinse, vorzugsweise eine F-Theta-Linse, im optischen Pfad zwischen dem Spiegel und dem Substrat (6) angeordnet ist.

6. Vorrichtung nach einem der Ansprüche 1 bis 5, **dadurch gekennzeichnet, dass** es sich bei der Lichtquelle (1) um eine Ultraviolettlichtquelle handelt.

7. Vorrichtung nach Anspruch 6, **dadurch gekennzeichnet, dass** die Ultraviolettlichtquelle im Bereich von 340 bis 390 nm, vorzugsweise bei ca. 350 nm, arbeitet.

8. Vorrichtung nach Anspruch 7, **dadurch gekennzeichnet, dass** die Ultraviolettlichtquelle als Frequenz verdreifachter Nd:YAG-Laser ausgebildet ist.

9. Verfahren zur Behandlung von lichtempfindlichen Biopolymeren unter Rückgriff auf eine Lichtquelle (1), eine Prozesskammer (3), welche zur Aufnahme eines Substrates (6) eingerichtet ist, auf welchem die Biopolymere zur Behandlung mit Licht von der Lichtquelle (1) platziert sind und eine Verteilereinheit (2), um das Licht der Lichtquelle (1) zu ausgewählten Bereichen auf dem Substrat (6) zu lenken, **dadurch gekennzeichnet, dass** für die Verteilereinheit (2) von wenigstens einem motorgetriebenen Spiegel Gebrauch gemacht wird, welcher auf einer drehbaren Spule befestigt ist, die sich zwischen Polen eines ein Magnetfeld erzeugenden Gerätes befindet, wobei die Orientierung des Spiegels gesteuert wird, indem die Spule an eine einstellbare elektrische Energiequelle (5) angeschlossen wird.

10. Verfahren nach Anspruch 9, **dadurch gekennzeichnet, dass** die Orientierung des Spiegels in eine vorgegebene Stellung ausgerichtet wird, welche zu einem vorgegebenen beleuchteten Bereich auf dem Substrat (6) korrespondiert.

11. Verfahren nach Anspruch 9 oder 10, **dadurch gekennzeichnet, dass** im Gebrauch die Temperatur des Motors des Spiegels stabilisiert wird.

## Revendications

1. Appareil de traitement de biopolymères photosensibles, comprenant au moins une source lumineuse, une chambre de traitement adaptée pour recevoir un substrat sur lequel les biopolymères sont placés en vue d'un traitement par de la lumière provenant de la source lumineuse, et un élément d'allocation destiné à orienter la lumière provenant de la source lumineuse vers des sites sélectionnés sur le substrat,
**caractérisé en ce que** l'élément d'allocation comprend au moins un miroir entraîné par un moteur, le miroir est monté sur une bobine rotative, agencée entre des pôles d'un dispositif générant un champ magnétique, et **en ce que** l'élément d'allocation comporte une source réglable d'électricité reliée à la bobine afin de commander l'orientation du miroir.

2. Appareil selon la revendication 1, **caractérisé en ce que** l'orientation du miroir est ajustable à une position prédéterminée correspondant au site d'illumination sélectionné sur le substrat.

3. Appareil selon la revendication 1 ou 2, **caractérisé en ce que** l'élément d'allocation est un miroir galvanométrique.

4. Appareil selon l'une des revendications 1 à 3, **caractérisé en ce que** le moteur du miroir est stabilisé en température.

5. Appareil selon l'une des revendications 1 à 4, **caractérisé en ce qu'**une lentille de focalisation, de préférence une lentille F-theta est placée sur le trajet optique entre le miroir et le substrat.

6. Appareil selon l'une des revendications 1 à 5, **caractérisé en ce que** la source lumineuse est une source de lumière ultraviolette.

7. Appareil selon la revendication 6, **caractérisé en ce que** la source de lumière ultraviolette fonctionne dans la plage de 340 à 390 nm, de préférence approximativement à 350 nm.

8. Appareil selon la revendication 7, **caractérisé en ce que** la source de lumière ultraviolette est un laser de type Nd:YAG à fréquence triplée.

9. Procédé de traitement de biopolymères photosensibles utilisant au moins une source lumineuse, une chambre de traitement convenant pour recevoir un substrat sur lequel des biopolymères sont placés en vue d'un traitement par de la lumière provenant de la source lumineuse, et un élément d'allocation destiné à orienter la lumière provenant de la source lumineuse vers des sites sélectionnés sur le substrat, **caractérisé en ce que**, pour l'élément d'allocation, on utilise au moins un miroir entraîné par un moteur qui est monté sur une bobine rotative agencée entre les pôles d'un dispositif générant un champ magnétique, où l'orientation du miroir est commandée en reliant une source réglable d'électricité à la bobine.

10. Procédé selon la revendication 9, **caractérisé en ce que** l'orientation du miroir est réglée à une position prédéterminée correspondant à un site d'illumination sélectionné sur le substrat.

11. Procédé selon la revendication 9 ou 10,
**caractérisé en ce que**, en utilisation, la température du moteur du miroir est stabilisée.
